(19)

**Europäisches Patentamt**

**European Patent Office**

**Office européen des brevets**

(11) **EP 4 783 446 A1**

(12) **EUROPEAN PATENT APPLICATION**
published in accordance with Art. 153(4) EPC

(43) Date of publication:
**29.07.2026 Bulletin 2026/31**

(21) Application number: **24866603.4**

(22) Date of filing: **14.05.2024**

(51) International Patent Classification (IPC):
**H02M 7/48** *(2007.01)*

(52) Cooperative Patent Classification (CPC):
**H02M 7/48**

(86) International application number:
**PCT/JP2024/017741**

(87) International publication number:
**WO 2025/062727 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.09.2023 JP 2023151632**

(71) Applicant: **Hitachi Industrial Equipment Systems
Co., Ltd.
Tokyo 101-0021 (JP)**

(72) Inventors:
• **MATSUMOTO, Daisuke
  Tokyo 100-8280 (JP)**
• **WATANABE, Masayuki
  Narashino-shi, Chiba 275-0001 (JP)**
• **MOURI, Koumei
  Tokyo 101-0021 (JP)**
• **MATSUNAGA, Shunsuke
  Tokyo 101-0021 (JP)**

(74) Representative: **MERH-IP Matias Erny Reichl
Hoffmann
Patentanwälte PartG mbB
Paul-Heyse-Straße 29
80336 München (DE)**

(54) **POWER CONVERSION DEVICE, REMOTE MONITORING SYSTEM FOR POWER CONVERSION DEVICE, AND LIFE ESTIMATION METHOD FOR POWER CONVERSION DEVICE**

(57) There is an issue with the low accuracy of the calculated losses, as well as the subsequent accuracy of the calculated temperature and degradation degree. It includes a junction-fin temperature calculator capable of calculating the junction-fin temperature and a fin temperature sensor capable of detecting the fin temperature. It calculates the junction temperature from the sum of the junction-fin temperature and the fin temperature. From the calculated junction temperature, it retrieves the loss characteristics based on that junction temperature and calculates a more accurate loss. From the calculated loss and the transient thermal characteristics table, it estimates the temperature and subsequently calculates the degradation degree.

Fig. 12

START
S1 — Inverter has started operation
S2 — Inverter has started operation
S3 — Acquires the switching frequency and on-duty from the motor control unit
S4 — Output current and DC voltage acquire from the sensor
S5 — Select parameters from the electrical characteristics table
S6 — Refer thermal characteristics table
S7 — Acquire inverter temperature from the temperature sensor
S8 — Determine the junction temperature
S9 — Newly determined junction temperature falls within the temperature range of the electrical characteristics table
S10 — Determine temperature amplitude
S11 — Store the temperature amplitude in the temperature history memory device
S12 — Processing capacity available
S13 — Determining the damage level of power semiconductors
S14 — Determining the cumulative damage level of power semiconductors
S15 — Estimate the lifespan of power semiconductors
S16 — output the lifespan of power semiconductors
S17 — Inverter stop
END

**Description**

TECHNICAL FIELD

The present invention relates to a power converter, a remote monitoring system for the power converter, and a lifespan estimation method of the power converter.

BACKGROUND ART

Inverters, a type of power converter, are widely used in industry as motor drive devices in manufacturing equipment, lifting equipment, conveying equipment and the like. In these various applications, stable operation of the inverter is required. Should an inverter fail, it can cause production stoppages at factories or equipment shutdowns, resulting in significant impact.

Inverters control the flow and interruption of current using power semiconductor devices such as IGBTs and diodes to perform the desired power conversion. Power semiconductor devices are joined by solder to wire bonds or copper foil patterns formed on an insulating substrate, thereby providing electrical connection to circuits external to the power semiconductor device. The insulating substrate is mounted on a metal base, and the power semiconductor device is cooled via the metal base. Components that incorporate power semiconductor devices into a housing equipped with such electrical connection structures to external circuits and cooling structures are called power modules.

When current flows through and is cut off from the power semiconductor device, the power semiconductor device generates heat, and a temperature difference (hereinafter referred to as $\Delta T$) occurs between the joint of the power semiconductor device (the joint between the element and the wire bonding, the joint between the element and the copper foil pattern) and the fin (metal base with a cooling structure). When the inverter stops, heat generation ceases and $\Delta T$ becomes small.

Since materials with different thermal expansion coefficients are used for the junctions of the above power semiconductor device, thermal stress is applied to the junctions due to fluctuations in $\Delta T$. Repeated fluctuations in $\Delta T$ cause delamination and cracks in the junctions, leading to failure. The time until such failure occurs varies depending on the magnitude and frequency of $\Delta T$. The magnitude and frequency of $\Delta T$ vary depending on the usage of the power converter and the equipment driven by the power converter.

Furthermore, the proportion of load applied to the IGBT and diode also varies depending on the operating conditions of the element. Therefore, to prevent such failures, measures are necessary to determine the degree of load applied to the IGBT and diode according to the operating conditions of the power converter.

Patent Document 1 is prior art in this technical field. Patent Document 1 describes a power converter equipped with a switching element, where the current flowing through the switching element and the switching element's loss are calculated from a loss data table. The calculated temperature change and transient thermal resistance characteristics are used to calculate the temperature change of the switching element (junction). The degree of degradation of the switching element is estimated based on the relationship between the calculated temperature change and the number of power cycle life cycles.

CITATION LIST

PATENT DOCUMENT

[Patent documents1] International Patent Publication No. 2021/106175

SUMMARY OF THE INVENTION

PROBLEMS TO BE SOLVED BY THE INVENTION

In Patent Document 1, a fixed loss data table is used to calculate the loss of a switching element. However, the degree of damage to the switching element varies significantly depending on the junction temperature of the switching element.

That is, the method of Patent Document 1 has the problem that the accuracy of the calculated loss, and consequently the accuracy of the subsequent calculations of temperature and degradation degree, is low due to the discrepancy between the actual junction temperature and the loss data table.

## EP 4 783 446 A1

SOLUTIONS TO PROBLEMS

Therefore, the present invention provides a junction-fin temperature calculator capable of calculating the junction-fin temperature and a fin temperature sensor capable of detecting the fin temperature. The junction temperature is calculated from the sum of the junction-fin temperature and the fin temperature. Based on the calculated junction temperature, the loss characteristics corresponding to that junction temperature are retrieved, enabling a more accurate calculation of the loss. The temperature is estimated from the calculated loss and the transient thermal characteristics table, followed by the calculation of the degradation degree.

EFFECTS OF THE INVENTION

The power converter of the present invention improves the accuracy of degradation estimation by performing loss calculations with higher precision than conventional methods based on real-time junction temperature.

BRIEF DESCRIPTION OF THE DRAWINGS

Fig. 1 is a configuration diagram of the power converter in an embodiment of the present invention.
Fig. 2 is a circuit diagram of the inverter in an embodiment of the power converter of the present invention.
Fig. 3 is an isometric view of the power module of the power converter according to an embodiment of the present invention.
Fig. 4 is a cross-sectional view of the power module of the power converter in an embodiment of the present invention.
Fig. 5 is a diagram showing the collector-emitter voltage versus collector current characteristics of the IGBT in the power converter of an embodiment of the present invention.
Fig. 6 is a diagram showing the single-pulse switching loss versus collector current characteristics of the IGBT in the power converter of an embodiment of the present invention.
Fig. 7 is a diagram showing the forward voltage-forward current characteristics of diodes in the power converter of an embodiment of the present invention.
Fig. 8 is a diagram showing the single-pulse recovery loss versus forward current characteristics of the IGBT in the power converter of an embodiment of the present invention.
Fig. 9 shows the thermal impedance-time characteristics of IGBTs in the power converter of an embodiment of the present invention.
Fig. 10 shows the thermal impedance-time characteristics of diodes in the power converter of an embodiment of the present invention.
Fig. 11 is a diagram showing the relationship between the junction temperature threshold and the electrical characteristics table in an embodiment of the present invention.
Fig. 12 is a flowchart showing the processing performed by the temperature history calculator in an embodiment of the present invention.
Fig. 13 is an example of an electrical characteristics table in an embodiment of the present invention.
Fig. 14 is a diagram showing the output of the life calculation results for an example of the power converter of the present invention.
Fig. 15 is a diagram showing the life cycle-Tjc characteristics of the power semiconductor device in the power converter of an embodiment of the present invention.
Fig. 16 is an example of a remote monitoring system using the power converter of the present invention.

METHOD FOR CARRYING OUT THE INVENTION

The following describes embodiments of the present invention with reference to the drawings.

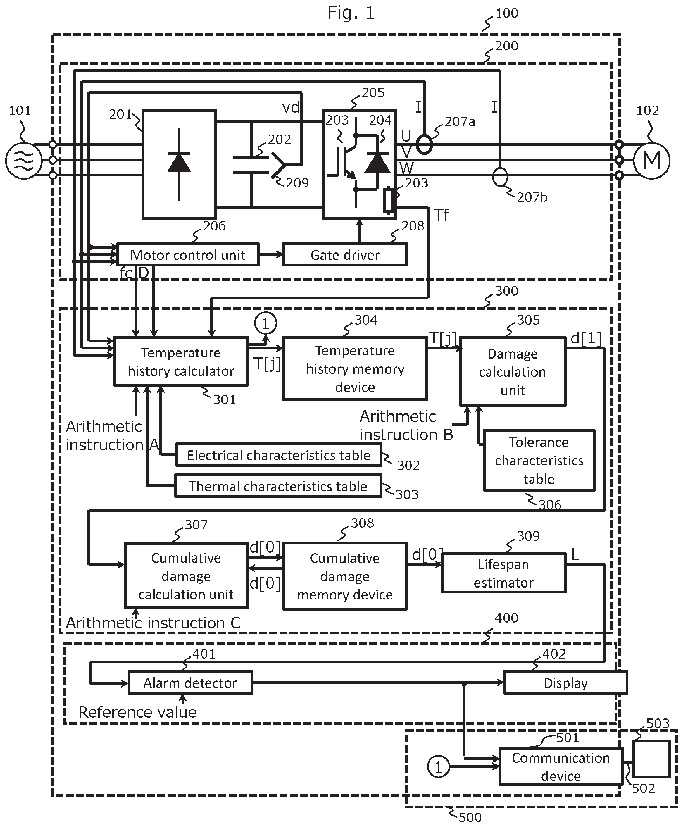

Fig. 1 is a schematic diagram of the power converter in an embodiment of the present invention. The power converter 100 in the embodiment of the present invention comprising a main circuit 200, a lifespan estimation device 300, and an interface device 400.
The main circuit 200 comprising a diode rectifier 201 that rectifies the alternating current power supplied from the AC power 101, a smoothing capacitor 202, and an inverter 205. The inverter 205 comprising power semiconductor switching elements, namely IGBTs 203 (a, b, c, d, e, f), and diodes 204 (a, b, c, d, e, f) connected in reverse parallel to the IGBTs.

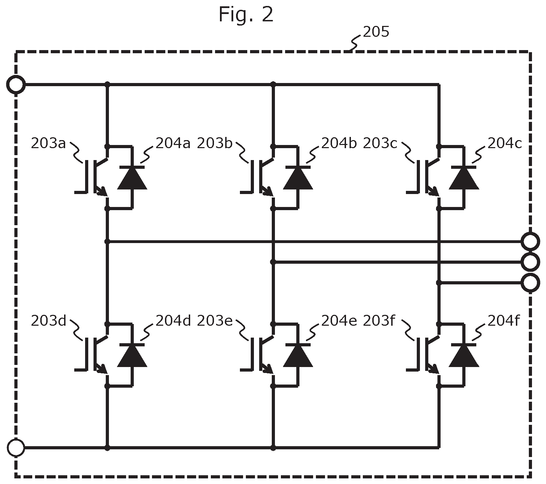

Fig. 2 is a circuit diagram of the inverter in an embodiment of the power converter of the present invention. In this embodiment, the inverter 205 is a three-phase two-level inverter. The inverter 205 is controlled by the motor control unit 206. Specifically, the motor control unit 206 calculates gate signals at a set carrier frequency f_C based on the current values detected by the current sensors 207 (a, b) and the speed command.

The calculated gate signals are amplified by the gate driver 208 and input as gate voltages to the IGBTs 203(a, b, c, d, e, f). The ratio of the gate on-period to the carrier cycle is called the on-duty D. This outputs a voltage such that the motor 102 operates at the commanded speed. Both the IGBT 203 and the diode 204 experience an increase in junction temperature during the on state due to Joule loss, switching losses during current flow switching, and recovery losses. The junction temperature decreases during the off state.

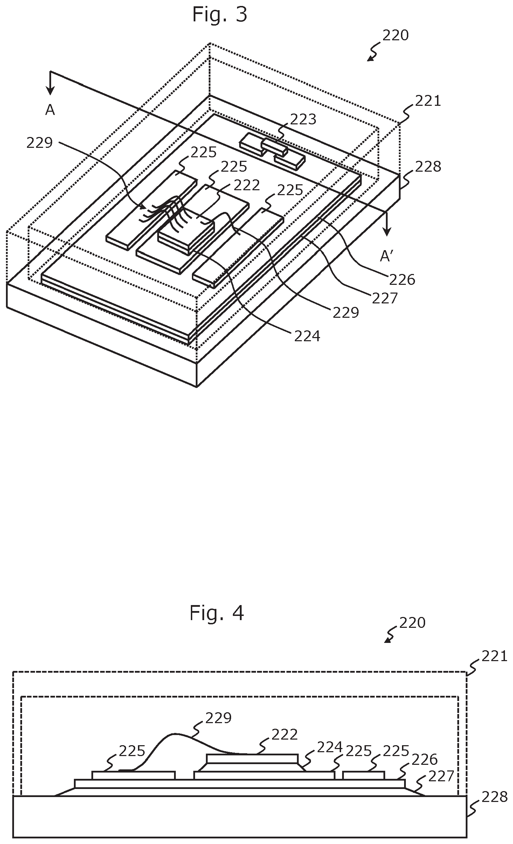

Fig. 3 is an isometric view of the power module of the power converter in an embodiment of the present invention. Fig. 4 shows the A-A' cross-sectional view within Fig. 3 of the power module 220 incorporating the IGBT 203 and diode 204. In Fig. 3, multiple power semiconductor devices 222, such as IGBT 203 and diode 204, and temperature sensor 223 are arranged on a plane within housing 221 (only one semiconductor element is explicitly shown in Fig. 3 and Fig. 4).

Fig. 4 is a cross-sectional view of the power module of the power converter in an embodiment of the present invention. The power semiconductor device 222, under-chip solder 224, copper foil 225, insulating substrate 226, under-board solder 227, and metal base 228 are stacked in that order. The under-chip solder 224 and under-board solder 227 bond adjacent layers. The other side of the semiconductor element surface is bonded with metal wire 229.

Because the power semiconductor device 222 is bonded with materials having different thermal expansion coefficients, stress is applied to the bonding joints when the temperature of the power semiconductor device rises or falls. The resistance to this stress is called power cycle endurance, which is expressed as the number of usable cycles for a given temperature amplitude called the life cycle.

Therefore, if the temperature history of the semiconductor element is known, its lifetime can be estimated.

The on-duty is determined by any modulation method, but for example, it can be set by the ratio of the DC voltage vd to the motor voltage vo (vo/vd).

[Formula 1]

$$D = \left( 1 + v_O \diagup v_d \ \sin \theta \right) \diagup 2$$

The losses of IGBT 203 and diode 204 can be calculated using formula 2 and formula 3, respectively.

[Formula 2]

$$P_q = ID\left( r_q I + v_q \right) + \left( a_q I + b_q \right) f_C \frac{v_d}{v_{db}}$$

[Formula 3]

$$P_d = I\left( 1 - D \right)\left( r_d I + v_d \right) + \left( a_d I + b_d \right) f_C \frac{v_d}{v_{db}}$$

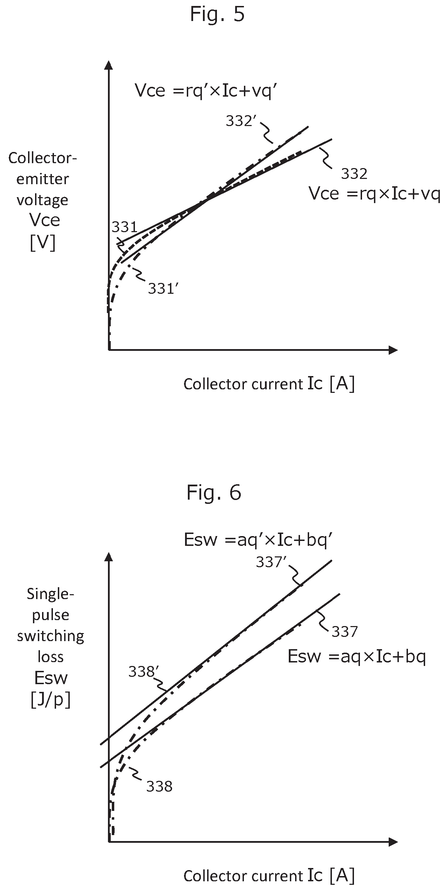

Fig. 5 is a diagram showing the collector-emitter voltage versus collector current characteristics of the IGBT in the power converter of an embodiment of the present invention.

Here, rq and vq are the slope and intercept, respectively, of the linear approximation curve of the collector-emitter voltage versus collector current characteristic of the IGBT as shown in Fig. 5.

The collector-emitter voltage versus collector current characteristics of an IGBT exhibit temperature dependence. Fig. 5 shows the low-temperature characteristic 331, its approximation curve 332, the high-temperature characteristic 331', and the high-temperature approximation curve 332'. In this example, the slope rq' of the high-temperature approximation curve 332' is smaller than the slope rq at low temperatures. The intercept vq' of the high-temperature approximation curve 332' is larger than the intercept vq at low temperatures. Fig. 6 is a diagram showing the single-pulse switching loss - collector current characteristics of the IGBT in the power converter of an embodiment of the present invention.

aq and bq are the slope and intercept of the linear approximation curve of the single-pulse switching loss-collector current characteristics of the IGBT when the DC voltage is vdb, as shown in Fig. 6.

The switching loss-collector current characteristics per pulse exhibit temperature dependence. Fig. 6 shows the low-temperature characteristic 338, its linear approximation curve 337, the high-temperature characteristic 338', and the high-temperature linear approximation curve 337'. In this example, the slope aq' of the high-temperature approximation curve 338' is smaller than the slope aq at low temperatures. The intercept bq' of the high-temperature approximation curve 332' is larger than the intercept vq at low temperatures.

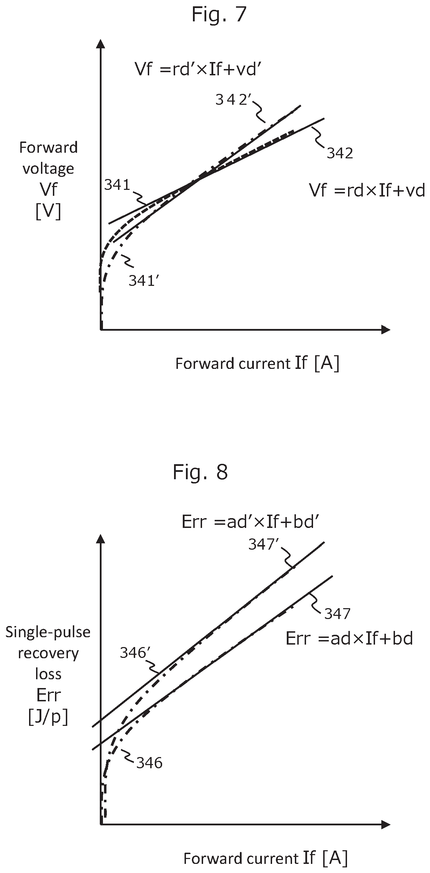

Fig. 7 is a diagram showing the forward voltage-forward current characteristics of diodes in a power converter according to an embodiment of the present invention.

rd and vd are the slope and intercept of the linear approximation curve 342 of the forward voltage-forward current characteristics of diodes 341 shown in Fig. 7.

The forward voltage-forward current characteristics of diodes exhibit temperature dependence. Fig. 7 shows the low-temperature characteristics 341, their linear approximation curve 342, the high-temperature characteristics 341', and the high-temperature linear approximation curve 342'. In this example, the slope rd' of the high-temperature linear approximation curve 342' is smaller than the slope rd at low temperatures. The intercept vd' of the high-temperature linear approximation curve 342' is larger than the intercept vd at low temperatures.

Fig. 8 is a diagram showing the single-pulse recovery loss - forward current characteristics of the IGBT in the power converter of an embodiment of the present invention.

ad and bd are the slope and intercept of the linear approximation curve 347 of the single-pulse recovery loss - forward current characteristics 346 of the diode at a DC voltage of Vdb, as shown in Fig. 8.

The recovery loss per pulse - forward current characteristics exhibit temperature dependence. Fig. 8 shows the low-temperature characteristic 346, its linear approximation curve 347, the high-temperature characteristic 346', and the high-temperature linear approximation curve 347'. In this example, the slope ad' of the high-temperature linear approximation curve 347' is smaller than the slope ad at low temperatures. The intercept bd' of the high-temperature linear approximation curve 347' is larger than the intercept bd at low temperatures.

Next, the temperatures of the IGBT and diode are calculated from the losses obtained above and the thermal characteristics of the IGBT and diode by the following formulas.

[Formula 4]

$$\Delta T_q[j] = \frac{\Delta t}{\tau_{thq} + \Delta t} r_{thq} P_q + \frac{\tau_{thq}}{\tau_{thq} + \Delta t} \Delta T_q[j-1]$$

[Formula 5]

$$\Delta T_d[j] = \frac{\Delta t}{\tau_{thd} + \Delta t} r_{thd} P_d + \frac{\tau_{thd}}{\tau_{thd} + \Delta t} \Delta T_d[j-1]$$

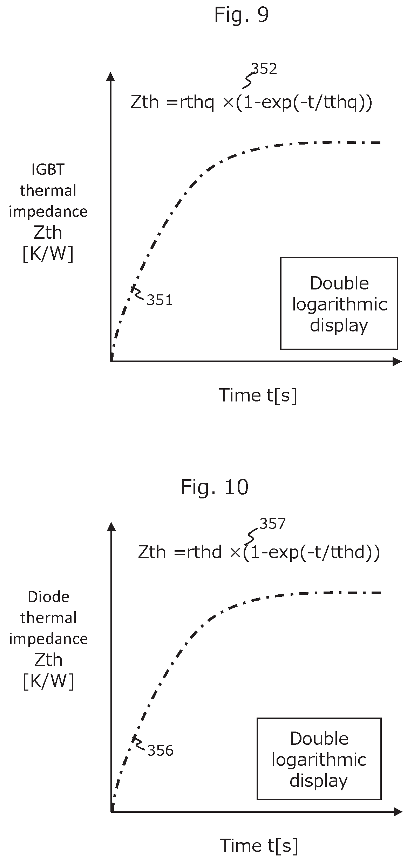

Fig. 9 is a diagram showing the thermal impedance-time characteristics of IGBTs in the power converter of an embodiment of the present invention. τthq and rthq are variables when approximating the thermal impedance-time characteristics of IGBTs using formula 11.

Fig. 10 is a diagram showing the thermal impedance-time characteristics of diodes in the power converter of an embodiment of the present invention. τthq and rthd are variables representing the thermal impedance-time characteristics of IGBTs approximated by formula 11.

[Formula 6]

$$T_{q\ j} = \Delta T_q[j] + T_f$$

Next, the junction temperature is calculated using formula 6 and formula 7.

[Formula 7]

$$T_{d\ j} = \Delta T_d[j] + T_f$$

[Formula 8]

$$d[1] = \sum_{j=1}^{k} n[j] \frac{1}{10^{b_{lx}} R[j]^{a_{lx}}}$$

Tf is the temperature of the heat sink on which the power module shown in Fig. 1 is mounted.

The heat sink temperature is acquired using a temperature sensor and input to the temperature calculator. The temperature sensor may be, for example, built into the power module or installed near the power module on the heat sink. For example, a thermocouple or thermistor may be used as the temperature sensor.

Next, based on the junction temperature calculation result obtained above, the variables used in the calculations of formula 2 and formula 3 are reset.

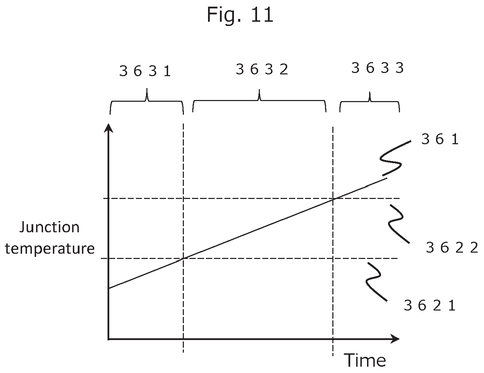

Fig. 11 is a diagram showing the relationship between the junction temperature threshold and the electrical characteristics table in an embodiment of the present invention. The temperature region is determined where the junction temperature 361 is bounded by the thresholds 3621 and 3622. In interval 3631, the junction temperature is determined to be at or below threshold 3621. In interval 3632, the junction temperature is determined to be at or above threshold 3621 and at or below threshold 3622.

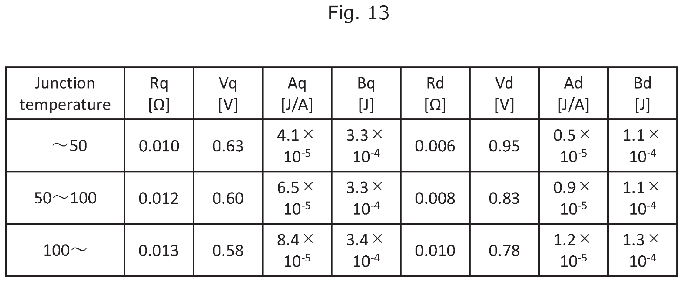

In interval 3633, the junction temperature is determined to be at or above threshold 3622. The thresholds may be set within the typical operating range of the power semiconductor, for example, threshold 3621 at 50°C and threshold 3622 at 100°C. Although two types of thresholds are illustrated here, the number of thresholds may be one or more. Based on the above determination, the electrical characteristics table 302 shown in Fig. 13, which is shown for each temperature range, is referenced. The variable groups rq, vq, aq, bq, rd, vd, ad, and bd to the temperature range to which the junction temperature belongs are selected.

For example, in the collector-emitter voltage versus collector current characteristic of the IGBT shown in Fig. 5, the characteristic in the low junction temperature region 361 is like characteristic 331. As junction temperature 361 increases, it changes to characteristic 331'. The slope rq (rq') and intercept vq (vq') of the linear approximation curve for the collector-emitter voltage versus collector current characteristic generally exhibit different characteristics.

Next, using the electrical characteristics table 302 corresponding to the junction temperature 361, the temperatures of the IGBT and diode are calculated again using formulas 2, 3, 4, and 5.

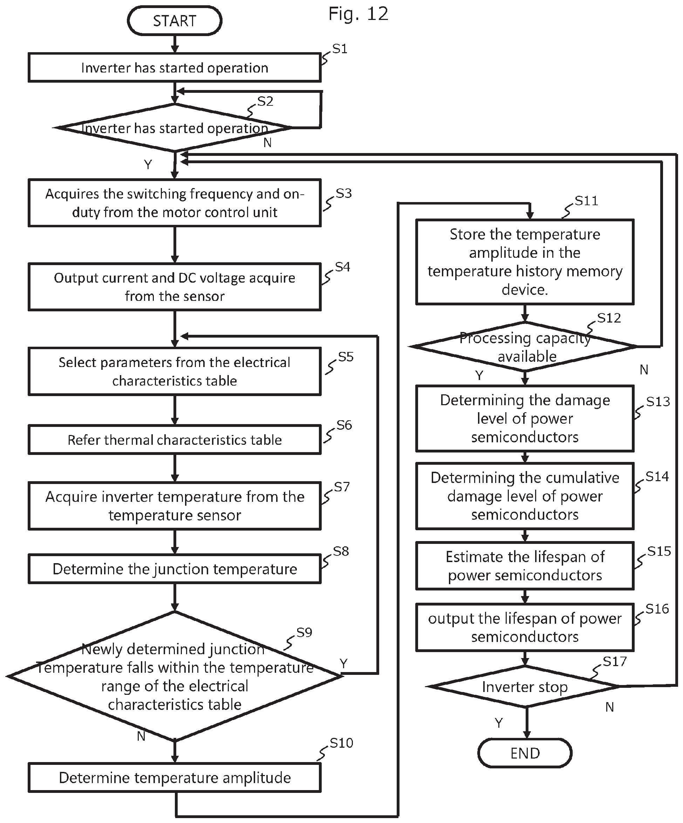

As shown in Fig. 12, the above flow begins by estimating the junction temperature, measuring the fin temperature, calculating the junction temperature, selecting the values of variables corresponding to the junction temperature from the electrical characteristics table as shown in Fig. 13, and calculating the temperatures of the IGBT and diode.

Here, an example method for estimating the junction temperature 361 involves calculating it from the sum of the junction temperature and the heat sink temperature. However, a temperature sensor may also be provided to measure the junction temperature. The junction temperature can also be estimated by reference to variables correlated with it, such as ambient temperature, inverter load factor, and operating time.

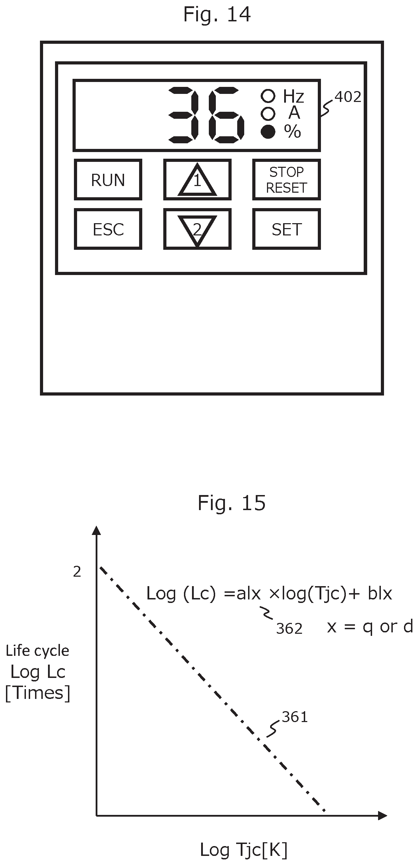

The threshold values 3621, 3622 dividing the above temperature regions need only be one or more. If there are two or more thresholds, the intervals between them may be either equal or unequal. Furthermore, the numerical values and temperature ranges in the above electrical characteristics table can also be arbitrarily set externally via a suitable interface, such as the display 402 shown in Fig. 14.

This example illustrates a case where the power semiconductor device has 36% of its lifespan remaining during normal operation.

After repeating the above procedures, the tasks essential for maintaining the power converter's functions, such as the inverter's PWM calculations, are completed. The state where the microcontroller's processing capacity has spare capacity is referred to as the standby state shown in Fig. 12. In this state, the process transitions to the next flow degradation evaluation.

Since temperature changes are stored for a fixed period, the frequency of temperature amplitude occurrence is counted using a counting method such as the rain flow method. From this result, the overall damage d[1] in the temperature history is calculated, for example, using formula 8.

[Formula 9]

$$d[0] = d[0] + d[1]$$

Here, R[j] is the j-th temperature amplitude, and n[j] represents the number of occurrences of R[j].

Fig. 15 is a diagram showing the life cycle-Tjc characteristics of the power semiconductor device in the power converter of an embodiment of the present invention. alx and blx are coefficients of the life cycle characteristic curve representing the relationship between temperature amplitude and lifetime.

This calculation result d[1] is sent to the cumulative damage calculation unit 307 shown in Fig. 1 and added to the cumulative damage d[0] read from the past cumulative damage memory device 308. That is, the new cumulative damage d[0] is calculated using formula 9.

[Formula 10]

$$d[0] = d[0] + d[1]$$

d[0] is initially 0. It increases as damage accumulates, and when it reaches 1, the component is judged to have reached its lifespan. This calculation result d[0] is sent to the cumulative damage memory device and stored. d[0] is sent to the lifespan estimator 309, which calculates the lifespan L using formula 10.

[Formula 11]

$$Z_{\text{th}} = r_{\text{th}} \left( 1 - e^{-\frac{t}{\tau_{\text{th}}}} \right)$$

L initially starts at 100 and decreases as damage accumulates. When it reaches 0, it indicates end-of-life. With this configuration, the lifespan estimation device 300 can calculate the lifespan associated with the power cycles of the IGBT 203 and diode 204.

Fig. 12 is a flowchart showing the processing in the temperature history calculator of an embodiment of the present invention. First, it determines whether the inverter has started operation (S2). Once operation is confirmed, it acquires the switching frequency and on-duty from the motor control unit (S3).

In addition to this information, losses are estimated based on the current output and DC voltage (S4) acquired from the sensor, along with parameters from the electrical characteristics table and formula 2 and formula 3 (S5). Next, the temperature difference between the junction and case is estimated (S7) based on the estimated losses, the thermal characteristics table, and formula 4 and formula 5 (S6). Next, the junction temperature is calculated (S8) from the junction-to-case temperature difference, the heat sink temperature, formula 6, and formula 7.

Determine whether the obtained junction temperature is within the temperature range of the electrical characteristics table (S9).

If it is not within the temperature range, refer to the electrical characteristics table within the temperature range and perform parameter reselection. After the parameters in the electrical characteristics table converge within the range of the estimated junction temperature, calculate the temperature amplitude based on formula 4 and formula 5 (S10), and store it in the temperature history memory device (S11).

If the temperature is not within the range and the processing unit has spare processing capacity (S12), power semiconductor damage level (formula 8) (S13), cumulative damage level (formula 9) (S14), and power semiconductor remaining life estimation (formula 10) (S15) are performed based on the temperature history.

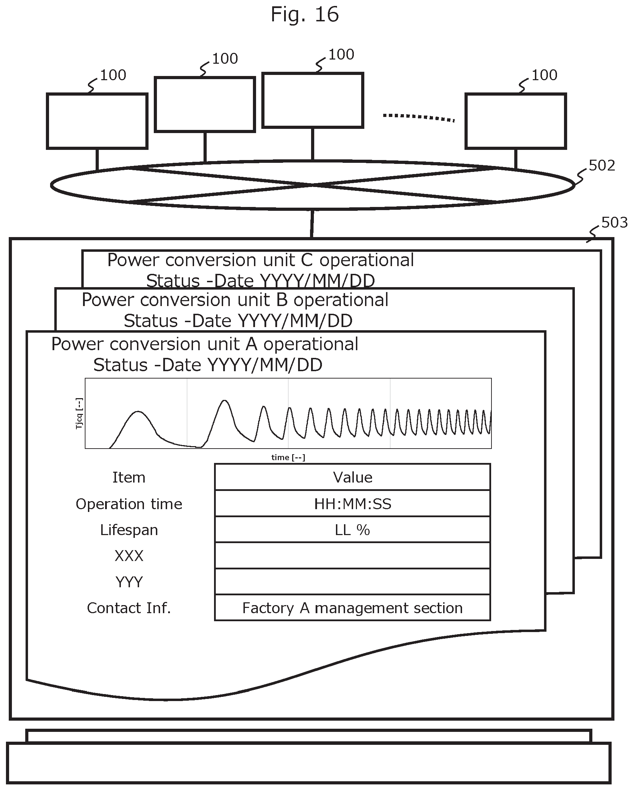

Next, the remote monitoring system for power converter 100 is described using Fig. 1 and Fig. 16. Power converter 100 includes a communication device 501 and a monitoring device 503 that monitors multiple inverters via a communication network 502.

Fig. 16 shows an example of a remote monitoring system using the power converter of the present invention. The temperature history calculator 301 sends the temperature history calculation results and the alarm determination results to the communication device 501. The communication device 501 sends this information to the monitoring device 503 via the communication network 502.

Each power converter 100 is connected to the communication network 502 via its respective communication device. Furthermore, the monitoring device 503 is connected to the communication network 502 and monitors multiple power converters 100.

The monitoring device 503 periodically receives the inverter identifier and remaining life from each power converter 100 in a corresponding manner. When the remaining life becomes shorter than a predetermined remaining life, it outputs the inverter identifier and remaining life in a corresponding manner to the output device.

At this time, it may also output the contact information associated with the administrator of the inverter.

The above configuration enables monitoring device 503 to monitor multiple power converters 100. Furthermore, by equipping monitoring device 503 with display devices such as displays offering greater detail than display unit 402 and high-performance computing units, integrated management and analysis become possible, including comparing the operating conditions of multiple power converters 100 and detecting abnormal operation.

For example, daily operational status can be managed even from locations distant from the power converters, such as an office, thereby streamlining management tasks. Furthermore, accumulated data enables the sequential updating of information necessary for formulating maintenance and operation plans. Additionally, during abnormal events, objective operational status can be shared among relevant departments, reducing downtime.

REFERENCE SIGNS LIST

| | |
|---|---|
| 100: | Power converter |
| 101: | AC power |
| 102: | Motor |
| 200: | Main circuit |
| 201: | Diode rectifier |
| 202: | Smoothing capacitor |
| 203 (a, b, c, d, e, f) : | IGBT |
| 204 (a, b, c, d, e, f): | Diode |
| 205: | Inverter |
| 206: | Motor control unit |
| 207(a, b): | Current sensor |
| 208: | Gate driver |
| 220: | Power module |
| 221: | Housing |
| 222: | Power semiconductor device |
| 223: | Temperature sensor |
| 224: | Under-chip solder |
| 225: | Copper foil |
| 226: | Insulating substrate |
| 227: | Under-board solder |
| 228: | Metal base |
| 229: | Metal wire |
| 300: | Lifespan estimation device |
| 301: | Temperature history calculator |
| 302: | Electrical characteristics table |
| 303: | Thermal characteristics table |
| 304: | Temperature history memory device |
| 305: | Damage calculation unit |
| 306: | Tolerance characteristics table |
| 307: | Cumulative damage calculation unit |
| 308: | Cumulative damage memory device |
| 309: | Lifespan estimator |
| 321: | DC voltage |
| 322: | Reference voltage |
| 336: | Switching loss - collector current characteristics |
| 337: | Linear approximation curve |
| 341: | Forward voltage-forward current characteristics of diodes |
| 342: | Linear approximation curve |
| 346: | Recovery loss - forward current characteristics |
| 347: | Linear approximation curve |
| 351: | Thermal impedance-time characteristics of IGBTs |
| 356: | Thermal impedance-time characteristics of diodes |
| 361: | Junction temperature |
| 362: | Life cycle - Tjc characteristic curve |
| 400: | Interface device |
| 401: | Alarm detector |
| 402: | Display |
| 421: | Estimated lifespan results |
| 422: | Reference value |
| 501: | Communication device |
| 502: | Communication network |
| 503: | Monitoring device |

**Claims**

1. A power converter comprising:

an inverter including a temperature sensor configured to supply electric power for driving a motor,
a main circuit including a motor control unit configured to control the motor,
a damage calculation unit configured to determine a degree of damage of an element based on a drive cycle of the inverter received from the motor control unit and historical temperature variation information obtained from the temperature sensor,
a lifespan estimation device including a lifespan estimation unit configured to estimate a remaining lifespan of the element based on the degree of damage obtained from the damage calculation unit, and
an interface device configured to output the remaining lifespan estimated by the lifespan estimation unit.

2. The power converter according to claim 1,

wherein the temperature sensor is installed on a heat sink of the inverter, and
the damage calculation unit is configured to convert a temperature variation of the heat sink obtained from the temperature sensor into a temperature variation at a junction of an element, and to determine a degree of damage of the element based on the converted temperature variation.

3. The power converter according to claim 1,

wherein the lifespan estimation device includes a temperature history calculation unit configured, calculate a cumulative count of temperature variations based on a drive cycle of the inverter,
determine a temperature rise based on data from the temperature sensor, and
generate historical temperature variation information based on the cumulative count of temperature variations and the temperature rise,
wherein the damage calculation unit is configured to determine a degree of damage of a component based on the historical temperature variation information generated by the temperature history calculation unit.

4. The power converter according to claim 1,

wherein the lifespan estimation device includes a cumulative damage calculation unit configured to calculate cumulative damage of an element based on the degree of damage obtained from the damage calculation unit, and the lifespan estimation unit is configured to estimate a remaining lifespan of the element based on the cumulative damage calculated by the cumulative damage calculation unit.

5. The power converter according to claim 3,

wherein the lifespan estimation device including a thermal characteristics table storing a correspondence between a temperature of a heat sink of the inverter and a temperature of an element,
and the temperature history calculation unit is configured to refer to the thermal characteristics table to generate historical temperature variation information of the element.

6. A lifespan estimation method for a power converter,

supplying electric power for driving a motor by a main circuit,
outputting a temperature of an inverter by a temperature sensor installed in the inverter,
outputting a drive cycle of the inverter by a motor control unit,
determining a degree of damage of an element by a damage calculation unit included in a lifespan estimation device, based on the drive cycle received from the motor control unit and historical temperature variation information obtained from the temperature sensor,
estimating a remaining lifespan of the element by a lifespan estimation unit based on the degree of damage obtained from the damage calculation unit, and
outputting the estimated remaining lifespan by an interface device.

7. A remote monitoring system for power converters, comprising:

an inverter including a temperature sensor configured to supply electric power for driving a motor,

a main circuit including a motor control unit configured to control the motor,

a damage calculation unit configured to determine a degree of damage of an element based on a drive cycle of the inverter received from the motor control unit and historical temperature variation information obtained from the temperature sensor,

a lifespan estimation device including a lifespan estimation unit configured to estimate a remaining lifespan of the element based on the degree of damage obtained from the damage calculation unit, and

plurality of power converters configures an interface device output the remaining lifespan estimated by the lifespan estimation unit and a monitoring device coupled with a network,

wherein the monitoring device receives the remaining lifespan of the inverter transmitted from each power converter, and to associate the received remaining lifespan with an identifier of the inverter and output the association.

Fig. 1

Fig. 2

Fig. 3

Fig. 4

## Fig. 5

$$Vce = rq' \times Ic + vq'$$

332'

Collector-emitter voltage Vce [V]

331

332

$$Vce = rq \times Ic + vq$$

331'

Collector current Ic [A]

## Fig. 6

$$Esw = aq' \times Ic + bq'$$

337'

Single-pulse switching loss Esw [J/p]

338'

337

$$Esw = aq \times Ic + bq$$

338

Collector current Ic [A]

## Fig. 7

Vf =rd'×If+vd'

342'

Forward
voltage
Vf
[V]

341

342

Vf =rd×If+vd

341'

Forward current If [A]

## Fig. 8

Err =ad'×If+bd'

347'

Single-pulse
recovery
loss
Err
[J/p]

346'

347

Err =ad×If+bd

346

Forward current If [A]

Fig. 9

$$Zth = rthq \times (1-exp(-t/tthq))$$

IGBT
thermal
impedance
Zth
[K/W]

352

351

Double
logarithmic
display

Time t[s]

Fig. 10

$$Zth = rthd \times (1-exp(-t/tthd))$$

Diode
thermal
impedance
Zth
[K/W]

357

356

Double
logarithmic
display

Time t[s]

## Fig. 11

Fig. 12

```
            ┌─────────┐
            │  START  │
            └─────────┘
                 │
    ┌────────────────────────────┐  S1
    │ Inverter has started operation │
    └────────────────────────────┘
                 │
         ◇ Inverter has started operation ◇  S2
                 │ Y                    N ─────────┐
    ┌────────────────────────────┐  S3            │
    │ Acquires the switching frequency and on-    │
    │ duty from the motor control unit            │
    └────────────────────────────┘               │
                 │                                 │
    ┌────────────────────────────┐  S4            │
    │ Output current and DC voltage acquire       │
    │ from the sensor                             │
    └────────────────────────────┘               │
                 │                                 │
    ┌────────────────────────────┐  S5            │
    │ Select parameters from the electrical       │
    │ characteristics table                       │
    └────────────────────────────┘               │
                 │                                 │
    ┌────────────────────────────┐  S6            │
    │ Refer thermal characteristics table         │
    └────────────────────────────┘               │
                 │                                 │
    ┌────────────────────────────┐  S7            │
    │ Acquire inverter temperature from the       │
    │ temperature sensor                          │
    └────────────────────────────┘               │
                 │                                 │
    ┌────────────────────────────┐  S8            │
    │ Determine the junction temperature          │
    └────────────────────────────┘               │
                 │                                 │
         ◇ Newly determined junction ◇  S9        │
           Temperature falls within the temperature
           range of the electrical
           characteristics table
              N │        Y ─────────┐
    ┌────────────────────────────┐  S10           │
    │ Determine temperature amplitude             │
    └────────────────────────────┘               │
```

S11 — Store the temperature amplitude in the temperature history memory device.

S12 — Processing capacity available

S13 — Determining the damage level of power semiconductors

S14 — Determining the cumulative damage level of power semiconductors

S15 — Estimate the lifespan of power semiconductors

S16 — output the lifespan of power semiconductors

S17 — Inverter stop

END

Fig. 13

| Junction temperature | Rq [Ω] | Vq [V] | Aq [J/A] | Bq [J] | Rd [Ω] | Vd [V] | Ad [J/A] | Bd [J] |
|---|---|---|---|---|---|---|---|---|
| ～50 | 0.010 | 0.63 | $4.1 \times 10^{-5}$ | $3.3 \times 10^{-4}$ | 0.006 | 0.95 | $0.5 \times 10^{-5}$ | $1.1 \times 10^{-4}$ |
| 50～100 | 0.012 | 0.60 | $6.5 \times 10^{-5}$ | $3.3 \times 10^{-4}$ | 0.008 | 0.83 | $0.9 \times 10^{-5}$ | $1.1 \times 10^{-4}$ |
| 100～ | 0.013 | 0.58 | $8.4 \times 10^{-5}$ | $3.4 \times 10^{-4}$ | 0.010 | 0.78 | $1.2 \times 10^{-5}$ | $1.3 \times 10^{-4}$ |

## Fig. 14

## Fig. 15

Log (Lc) = alx × log(Tjc) + blx

x = q or d

Life cycle Log Lc [Times]

Log Tjc[K]

Fig. 16

100    100    100    100    502    503

Power conversion unit C operational
Status -Date YYYY/MM/DD

Power conversion unit B operational
Status -Date YYYY/MM/DD

Power conversion unit A operational
Status -Date YYYY/MM/DD

Tjcq [--]

time [--]

| Item | Value |
|---|---|
| Operation time | HH:MM:SS |
| Lifespan | LL % |
| XXX | |
| YYY | |
| Contact Inf. | Factory A management section |

## INTERNATIONAL SEARCH REPORT

International application No.

**PCT/JP2024/017741**

| A. | CLASSIFICATION OF SUBJECT MATTER |
| --- | --- |

*H02M 7/48*(2007.01)i
FI: H02M7/48 M

According to International Patent Classification (IPC) or to both national classification and IPC

| B. | FIELDS SEARCHED |
| --- | --- |

Minimum documentation searched (classification system followed by classification symbols)

H02M7/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-25408 A (HITACHI INDUSTRIAL EQUIPMENT SYSTEMS CO., LTD.) 10 February 2022 (2022-02-10) paragraphs [0012]-[0058] | 1, 3-4, 6-7 |
| Y | | 2, 5 |
| Y | WO 2014/091852 A1 (FUJI ELECTRIC CO., LTD.) 19 June 2014 (2014-06-19) paragraph [0004] | 2, 5 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017741**

| Patent document cited in search report | | | Publication date (day/month/year) | Patent family member(s) | | | Publication date (day/month/year) |
|---|---|---|---|---|---|---|---|
| JP | 2022-25408 | A | 10 February 2022 | US | 2023/0268823 | A1 | |
| | | | | paragraphs [0031]-[0068] | | | |
| | | | | WO | 2022/024890 | A1 | |
| | | | | EP | 4191863 | A1 | |
| | | | | TW | 202204925 | A | |
| | | | | CN | 115943551 | A | |
| WO | 2014/091852 | A1 | 19 June 2014 | US | 2015/0211938 | A1 | |
| | | | | paragraph [0007] | | | |
| | | | | EP | 2933618 | A1 | |
| | | | | CN | 104736981 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021106175 A